# EUROPÄISCHE PATENTSCHRIFT

(11) **EP 0 868 538 B1**
(45) Veröffentlichungstag und Bekanntmachung des Hinweises auf die Patenterteilung: **18.08.1999**
(21) Anmeldenummer: 96944008.0
(22) Anmeldetag: 19.12.1996
(51) Int. Cl.: C22C 9/04, C22C 9/02, F16D 23/04

(54) **REIBKÖRPER UND VERFAHREN ZUM HERSTELLEN EINES SOLCHEN**
FRICTION BODY AND METHOD FOR PRODUCING THE SAME
CORPS DE FRICTION ET SON PROCEDE DE FABRICATION

(30) Priorität: 21.12.1995 DE 19548124
(43) Veröffentlichungstag der Anmeldung: 07.10.1998
(73) Patentinhaber: euroflamm GmbH, 28719 Bremen (DE); Diehl Stiftung & Co., 90478 Nürnberg (DE)
(72) Erfinder: BISCHOFF-BOGON, Werner, D-28779 Bremen (DE); GEBHARD, Friedrich, D-91207 Lauf (DE)
(74) Vertreter: Gahlert, Stefan, Dr.-Ing.
(86) Internationale Anmeldenummer: EP9605702
(87) Internationale Veröffentlichungsnummer: WO9723658

(56) Entgegenhaltungen:
- DE-A- 3 805 794
- DE-A- 3 809 994
- DE-A- 4 035 264
- DE-A- 4 428 153
- DE-A- 19 539 498
- FR-A- 2 411 895

## Beschreibung

Die Erfindung betrifft einen Reibkörper mit einem Grundkörper, auf den eine Beschichtung durch thermisches Spritzen einer Kupferlegierung aufgebracht ist.

Die Erfindung betrifft ferner ein Verfahren zum Herstellen eines Reibkörpers, bei dem auf einen Grundkörper eine Beschichtung aus einer Kupferlegierung durch thermisches Spritzen aufgebracht ist.

Ein derartiger Reibkörper und ein derartiges Verfahren zum Herstellen eines Reibkörpers sind aus der DE-C 3 637 386 bekannt.

Danach wird zur Herstellung eines Synchronrings, der im wesentlichen aus einem torusförmigen Metallkörper mit angesetzter Außenverzahnung besteht, zunächst auf den metallischen Grundkörper im Plasmasprüh-Verfahren eine Haftgrundschicht aus einer Bronze-, einer Aluminium/Nickel-Legierung oder dergleichen aufgebracht.

Anschließend wird auf dieser Haftgrundschicht ein Streusinter-Reibbelag aufgebracht. Hierzu wird der Grundkörper mit einem Einsatzkörper zusammengesetzt. Der Einsatzkörper weist Zentriermittel zum Halten des Grundkörpers in einer definierten Position sowie eine im definierten Abstand von der Oberfläche angeordneten Gegenfläche auf. Der durch den definierten Abstand, die Oberfläche und die Gegenfläche gebildete Hohlraum wird mit einem Streusinter-Pulver gefüllt, und der Einsatzkörper wird mit dem Grundkörper bei gefülltem Hohlraum gesintert.

Auf diese Weise kann ein im Sinterverfahren hergestellter Reibbelag ohne zusätzliche mechanische Fixierungsmittel auf dem Grundkörper befestigt werden.

Darüber hinaus sind zahlreiche andere Verfahren zum Herstellen von Streusinter-Reibbelägen bekannt (vergl. z.B. DE-C 3 417 813 und EP-B-0 292 468).

Auf die Streusinter-Reibbeläge muß in der Regel noch eine zusätzliche Reibschicht aus Molybdän aufgebracht werden, um die notwendige Lebensdauer zu erreichen (vergl. DE-A-2 055 346, DE-C-3 412 779).

Die Herstellung von Streusinter-Reibbelägen ist somit relativ aufwendig und teuer.

Darüber hinaus ist es grundsätzlich bekannt, als Werkstoff für Einmetall-Synchronringe Sondermessinge vom Typ CuZn40A12 zu verwenden, weil sich diese Werkstoffe durch eine gute Kombination von Reibbeiwert, Verschleißwiderstand und mechanischer Festigkeit auszeichnen. Für mechanisch stärker belastete Synchronringe werden Sondermessinge mit Gehalten an Mangan, Aluminium, Eisen, Silizium, Nickel, Zinn und/oder Blei eingesetzt (DE-C 3 412 779). Auch hierbei wird der geforderte Verschleißwiderstand dieser mechanisch höher belastbaren Synchronringe durch eine aufgetragene Molybdän-Beschichtung erreicht.

Den vorbekannten Synchronringen ist gemeinsam, daß zur Herstellung von hoch belastbaren Synchronringen eine Reihe von aufwendigen Verfahrensschritten erforderlich ist, wozu in der Regel auch das Aufbringen einer Molybdän-Beschichtung gehört, da nur eine Molybdän-Beschichtung den notwendigen Verschleißwiderstand aufweist, wie er etwa für Synchronringe gefordert wird, die in einem Kraftfahrzeuggetriebe verwendet werden sollen. Des weiteren ist in der Regel eine aufwendige Nachbehandlung durch Schleifen erforderlich, um die nötige Oberflächengüte der Reibfläche zu erreichen. Eine Beschichtung mit Molybdän hat sich jedoch in jüngster Zeit aus verschiedenen Gründen als problematisch erwiesen: Zum einen ist Molybdän ein verhältnismäßig teures Metall, das wegen seiner hohen Verschleißfestigkeit aufwendige und teure Werkzeuge bei der Bearbeitung erfordert. Zum anderen führt die Verwendung von Molybdän als verschleißfeste Schicht auf Synchronringen dazu, daß die betreffenden Getriebe bei einer späteren Entsorgung als Sondermüll behandelt werden müssen. Es wird daher in jüngster Zeit nach Möglichkeiten gesucht, Synchronringe zu entwickeln, bei denen auf eine verschleißfeste Molybdänbeschichtung verzichtet werden kann. DE-A-4 035 264 offenbart kupferlegierungen für Synchronisierringe, die zuzätzliche Komponenten wie Nb und/oder Mo enthalten.

Der Erfindung liegt somit die Aufgabe zugrunde, einen Reibbelag ohne Molybdänbeschichtung und ein Verfahren zur Herstellung eines solchen zu schaffen, der einfach und kostengünstig hergestellt werden kann, eine möglichst geringe Nachbehandlung erfordert und gleichzeitig gute Reibkennwerte und Verschleißfestigkeit aufweist.

Diese Aufgabe wird bei einem Verfahren gemäß Anspruch 1 gelöst.

Diese Aufgabe wird bei einem Reibkörper gemäß Anspruch 4 gelöst.

Die Aufgabe der Erfindung wird auf diese Weise vollkommen gelost, da durch die erfindungsgemäße Herstellung des Reibbelages durch thermisches Spritzen infolge der speziellen Legierungsauswahl einerseits bereits durch das thermische Spritzen eine so hohe Oberflächengüte erzielt wird, daß eine Nachbehandlung durch Schleifen nicht mehr erforderlich ist. Andererseits zeigt der erfindungsgemäße Reibkörper eine ausreichende Duktilität bei einer guten Verschleißfestigkeit und guten tribologischen Eigenschaften.

Beim thermischen Spritzen wird eine Oberfläche erzeugt, deren R_{z}-Wert bereits etwa zwischen 40*µ* und 50*µ* liegt und damit schon relativ günstig ist. Die so hergestellte Beschichtung, die vorzugsweise eine Schichtstärke zwischen etwa 0,1 und 0,2 mm, insbesondere zwischen etwa 0,12 und 0,15 mm aufweist, wird in bevorzugter Weiterbildung der Erfindung lediglich durch Prägen nachbehandelt, wodurch die Oberfläche dann einen R_{z}-Wert von etwa 20*µ* erhält.

Nach dem erfindungsgemäßen Verfahren läßt sich somit ohne eine aufwendige Nachbehandlung, die bei herkömmlichen Reibbelägen in der Regel mittels Schleifen durchgeführt werden muß, eine hohe Oberflächengüte erreichen.

Erfindungsgemäß hergestellte Synchronringe erfüllen insbesondere bei Verwendung von synthetischen Ölen mit gehärtetem Stahl als Gegenreibfläche auch die höchsten Anforderungen bezüglich Verschleißfestigkeit, Zähigkeit, hoher spezifischer Reibarbeit und hoher spezifischer Reibleistung. Des weiteren wird der Stick-Slip-Effekt gegenüber herkömmlichen Reibkörpern deutlich vermindert.

Erfindungsgemäß hergestellte Reibbeläge sind für alle nur denkbaren Anwendungsfälle geeignet, zum Einsatz bei Backen-, Scheiben-, Kegelkupplungen und -bremsen, bei Synchronringen, bei Lamellenkupplungen und -bremsen, bei Sperrdifferentialen u.s.w.

Die Kupferlegierung, die erfindungsgemäß durch thermisches Spritzen auf den Grundkörper aufgetragen wird, weist einerseits eine Reihe von Legierungsbestandteilen auf, die die Legierung beim thermischen Spritzen stabilisieren und die andererseits der Erzeugung einer zähen, verschleißfesten Schicht mit guten tribologischen Eigenschaften dienen.

Der Bestandteil Titan dient der Erzeugung von fein dispers in der metallischen Matrix verteilten harten Einschlüssen, die durch die hohe Temperatur beim thermischen Spritzen meist in oxidischer Form vorliegen.

Besonders bevorzugt ist hierbei Titan in einer Konzentration von 0.5-2 Gew.-%. Es hat sich hierbei gezeigt, daß sich auf diese Weise eine besonders gute Verschleißfestigkeit ergibt.

Die weiteren Bestandteile der Kupferlegierung, 2 bis 4 Gew.-% Nickel, sowie 4 bis 6 Gew.-% Aluminium, dienen der thermischen Stabilisierung der Kupferlegierung während des thermischen Spritzens, bei dem je nach gewähltem Verfahren Temperaturen in der Größenordnung von 2000°C oder höher auftreten können. Bei einer geringeren Konzentration der zuvor erwähnten Zusätze wäre die Kupferlegierung nicht ausreichend thermisch stabil für das thermische Spritzen, so daß einzelne Bestandteile segregieren würden, so daß sich ungewollte, grob verteilte zufällige Phasen in der Matrix ausbilden würden, so daß die gewünschte Zähigkeit und Verschleißfestigkeit der Matrix sowie die tribologischen Eigenschaften nicht mehr erreicht werden könnten.

Besonders vorteilhafte Ergebnisse wurden mit einer Kupferlegierung erzielt, die 59 bis 61 Prozent Kupfer, 27 bis 35 Prozent Zink, 0,5 bis 2 Prozent Titan, 2 bis 4 Prozent Nickel und 4 bis 6 Prozent Aluminium enthält.

Nach der Erzeugung dieser Beschichtung auf dem Grundkörper ist lediglich eine Nachbehandlung durch Prägen erforderlich, um selbst bei höchsten Anforderungen, wie etwa bei Synchronringen die notwendigen Reibkennwerte und eine hohe Verschleißfestigkeit zu erreichen. Die Beschichtung weist eine Härte von etwa 600 bis 700 HV auf und vorzugsweise eine Schichtdicke von etwa 0,12 bis 0,15 mm. Eine gewisse Restporosität der Beschichtung dient einerseits der Schmiermittelaufnahme und andererseits der Wärmeabfuhr.

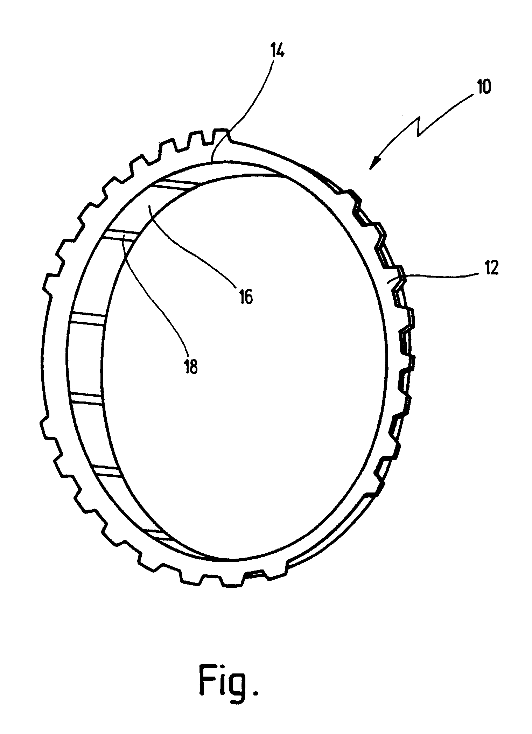

Weitere Merkmale und Vorteile der Erfindung ergeben sich aus der nachfolgenden Beschreibung eines bevorzugten Ausführungsbeispiels unter Bezugnahme auf die Zeichnung.

Die einzige Figur zeigt einen Synchronring mit kegelförmiger Reibfläche in leicht vereinfachter, perspektivischer Darstellung.

In der Figur ist ein erfindungsgemäßer Reibbelag am Beispiel eines Synchronrings dargestellt und insgesamt mit der Ziffer 10 bezeichnet.

Der Synchronring 10 umfaßt eine kegelförmige Reibfläche 16, in der Drainagenuten 18 zur Ölabfuhr vorgesehen sind.

Die Reibfläche 16 ist auf einen Grundkörper 14 aus Sinterstahl aufgebracht, dessen Rand in bekannter Weise durch gleichmäßige Winkelabstände voneinander getrennte Umfangsverzahnungen 12 aufweist.

Vor der Aufbringung der Beschichtung 16 wird der Grundkörper im Bereich der durch thermisches Spritzen aufzubringenden Beschichtung sandgestrahlt, um eine gute Haftung der Beschichtung zu gewährleisten.

Zur Erzeugung der Beschichtung auf der Reibfläche 16 wird erfindungsgemäß eine Kupferlegierung verwendet, die 27 bis 35 Gew.-% Zink, 0,5 bis 2 Gew.-% Titan, 2 bis 4 Gew.-% Nickel, sowie 4 bis 6 Gew.-% Aluminium, sowie Kupfer als Rest verwendet.

Eine bevorzugte Kupferlegierung (Legierung L7) wurde mit etwa 60 Prozent Kupfer, 30,5 Prozent Zink, 1,5 Prozent Titan, 3 Prozent Nickel, 5 Prozent Aluminium unter Verwendung von Kupfervorlegierungen in einem Tiegelofen erschmolzen und nach dem Erkalten unter Schutzgasatmosphäre verdüst. Das so erzeugte Pulver wurde anschließend kaltgepreßt und nachkalibriert, um einen zum thermischen Spritzen geeigneten Draht zu erzeugen. Alternativ kann die betreffende Legierung auch in Pulverform zum thermischen Spritzen verwendet werden.

Dieser Draht wurde verwendet, um durch Flammspritzen eine Beschichtung mit einer Schichtdicke von etwa 0,12 bis 0,15 mm auf den Grundkörper aufzubringen. Die Beschichtung 16 wies nach ihrer Erzeugung durch Flammspritzen einen R_{z}-Wert von etwa 40 bis 50*µ* auf. Anschließend wurde eine Nachbehandlung der Oberfläche der Reibfläche 16 durch Prägen durchgeführt, was zu einem R_{z}-Wert von etwa 20*µ* führte, bei einer Härte von etwa 600 bis 700 HV.

Die so erzeugte Reibfläche 16 wurde mit einem gehärteten Stahl als Gegenreibfläche unter Verwendung eines synthetischen Öls Reibversuchen unterzogen.

Dabei zeigte sich ein gegenüber herkömmlichen streugesinterten Synchronringen veringerter Stick-Slip-Effekt, eine gute spezifische Reibarbeit und -leistung, und eine hohe Standfestigkeit, die höchste Anforderungen erfüllte.

Erfindungsgemäß hergestellte Reibbeläge zeichnen sich gegenüber herkömmlichen Reibbelägen durch eine erheblich vereinfachte Herstellung aus, da zur Erzielung der notwendigen Reibkennwerte und Verschleißfestigkeit lediglich eine einzige Beschichtung mittels thermischem Spritzen auf den Grundkörper aufgebracht werden muß, wobei meist lediglich eine Nachbehandlung durch Prägen erforderlich ist.

Somit ergibt sich gegenüber dem Stand der Technik eine erheblich vereinfachte, kostengünstige Herstellung.

Einige alternative Kupferlegierungen, die mit L2 bis L6 bezeichnet sind, sind in Tabelle 1 zusammengefaßt, wobei L6 ungefähr der Zusammensetzung von L7 entspricht.

Die Ergebnisse von Reibwertprüfstandsversuchen mit Synchronringen, die durch thermisches Spritzen beschichtet wurden, sind in Tabelle 2 zusammengefaßt. Zum Vergleich wurde auch eine thermisch gespritzte Molybdän-Beschichtung getestet, die naturgemäß eine besonders hohe Verschleißfestigkeit aufweist.

Die Ergebnisse zeigen, daß insbesondere die Legierungen L6/L7 hervorragende Ergebnisse liefern, die bezüglich Verschleißfestigkeit und Reibzahl mit Molybdän vergleichbar sind. Entscheidend für den Einsatz in Getrieben ist die erreichte Schaltzahl, ein geringer Reservewegverlust, der möglichst unter 0,5 mm liegen sollte und ein dynamischer Reibeffizient von mindestens 0,075 möglichst nach 15.000 Schaltungen.

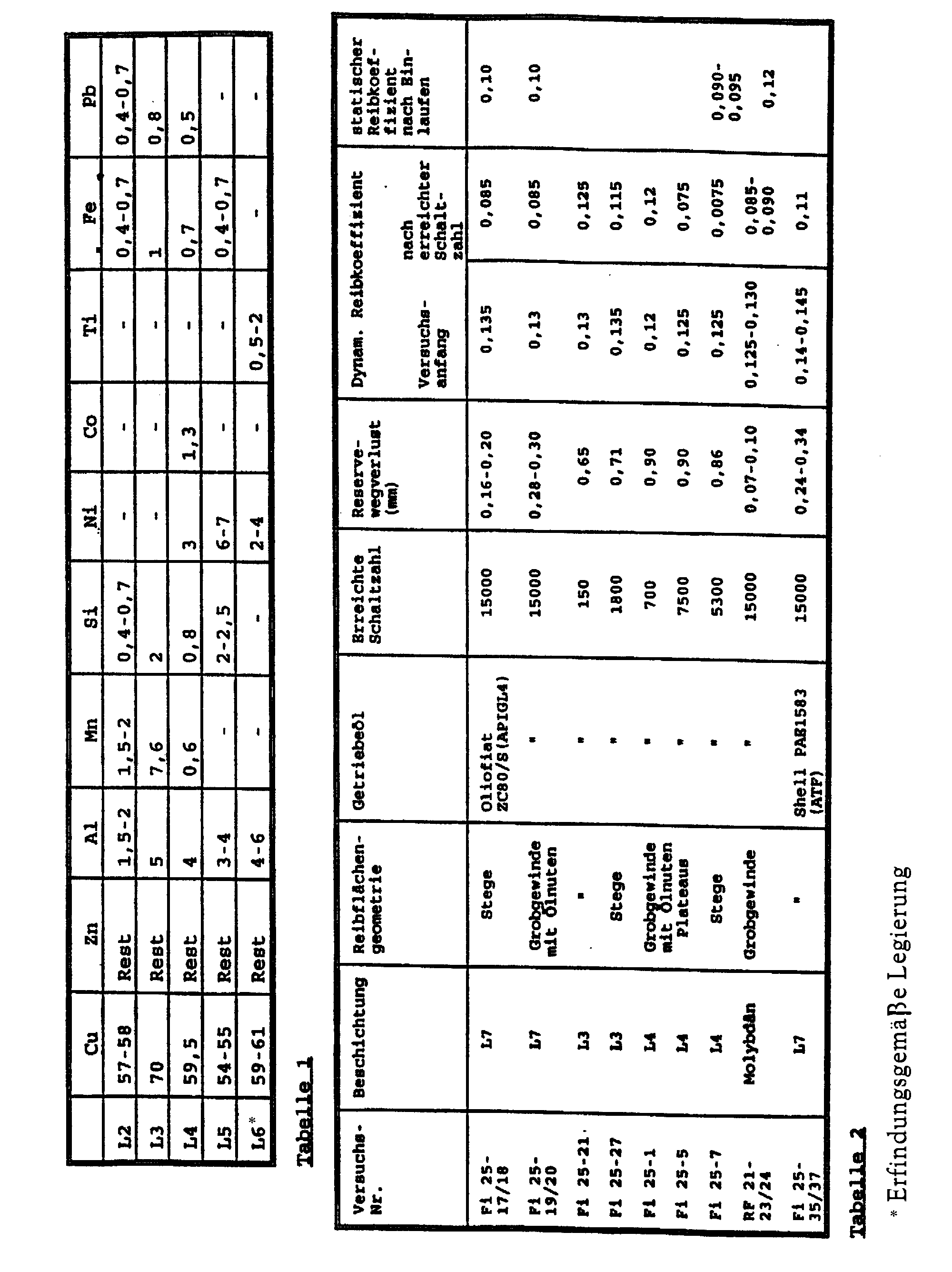

## Patentansprüche

1. Verfahren zum Herstellen eines Reibkörpers (10), bei dem auf einem Grundkörper (14) durch thermisches Spritzen einer Kupferlegierung eine Beschichtung (16) aufgebracht wird, dadurch gekennzeichnet, daß eine Kupferlegierung verwendet wird, die 27 bis 35 Gew.-% Zink, 4 bis 6 Gew.-% Aluminium, 0,5 bis 2 Gew.-% Titan und 2 bis 4 Gew.-% Nickel, sowie Kupfer als Rest mit zufälligen Verunreinigungen enthält.

2. Verfahren nach Anspruch 1, dadurch gekennzeichnet, daß eine Kupferlegierung verwendet wird, die 0,5 bis 1,5 Gew.-% Titan enthält.

3. Verfahren nach Anspruch 1 oder 2, dadurch gekennzeichnet, daß die Beschichtung (16) nach der Erzeugung durch thermisches Spritzen durch Prägen nachbehandelt wird.

4. Reibkörper mit einem Grundkörper (14), auf den durch thermisches Spritzen einer Kupferlegierung eine Beschichtung (16) aufgebracht ist, dadurch gekennzeichnet, daß die Kupferlegierung 27 bis 35 Gew.-% Zink, 4 bis 6 Gew.-% Aluminium, 0,5 bis 2 Gew.-% Titan und 2 bis 4 Gew.-% Nickel, sowie Kupfer als Rest mit zufälligen Verunreinigungen enthält.

5. Reibkörper nach Anspruch 4, dadurch gekennzeichnet, daß die Kupferlegierung 0,5 bis 1,5 Gew.-% Titan enthält.

## Claims

1. A method for producing a friction body (10), in which a coating (16) is applied onto a base element (14) by thermal spraying of a copper alloy, characterized in that the copper alloy contains 27 to 35 wt% of zinc, 4 to 6 wt% of aluminum, 0.5 to 2 wt% of titanium and 2 to 4 wt% of nickel, and copper as the remainder, with random contaminants.

2. The method as defined in Claim 1, characterized in that a copper alloy is used which contains 0.5 to 1.5 wt% of titanium.

3. The method as defined in claim 1 or 2, characterized in that the coating (16), after being produced by thermal spraying, is finish-treated by stamping.

4. A friction body having a base element (14) onto which a coating (16) is applied by thermal spraying of a copper alloy, characterized in that the copper alloy contains 27 to 35 wt% of zinc, 4 to 6 wt% of aluminum, 0.5 to 2 wt% of titanium, 2 to 4 wt% of nickel, and copper as the remainder, with random contaminants.

5. The friction body as defined in claim 4, characterized in that the copper alloy contains 0.5 to 1.5 wt% of titanium.

## Revendications

1. Procédé de fabrication d'un corps de friction (10) au cours duquel un revêtement (16) est appliqué sur un corps de base (14) par projection à chaud d'un alliage de cuivre, caractérisé en ce qu'on utilise un alliage de cuivre qui contient de 27 à 35 % en poids de zinc, de 4 à 6 % en poids d'aluminium, de 0,5 à 2 % en poids de titane et de 2 à 4 % en poids de nickel, ainsi que du cuivre pour le reste avec des impuretés occasionnelles.

2. Procédé selon la revendication 1, caractérisé en ce qu'on utilise un alliage de cuivre qui contient de 0,5 à 1,5 % en poids de titane.

3. Procédé selon la revendication 1 ou 2, caractérisé en ce qu'après avoir été produit par projection à chaud, le revêtement (16) est soumis à un traitement complémentaire par emboutissage.

4. Corps de friction présentant un corps de base (14) sur lequel est appliqué un revêtement (16) par projection à chaud d'un alliage de cuivre, caractérisé en ce que l'alliage de cuivre contient de 27 à 35 % en poids de zinc, de 4 à 6 % en poids d'aluminium, de 0,5 à 2 % en poids de titane et de 2 à 4 % en poids de nickel, ainsi que du cuivre pour le reste avec des impuretés occasionnelles.

5. Corps de friction selon la revendication 4, caractérisé en ce que l'alliage de cuivre contient de 0,5 à 1,5 % en poids de titane.
